Europäisches Patentamt

European Patent Office

Office européen des brevets

(19)

(11) Veröffentlichungsnummer: **0 065 038**
**A1**

(12) # EUROPÄISCHE PATENTANMELDUNG

(21) Anmeldenummer: 81200529.6

(22) Anmeldetag: 18.05.81

(51) Int. Cl.³: **H 02 M 7/515**

(43) Veröffentlichungstag der Anmeldung: 24.11.82
Patentblatt 82/47

(84) Benannte Vertragsstaaten: **AT BE CH DE FR GB IT LI LU NL SE**

(71) Anmelder: **BBC Aktiengesellschaft Brown, Boveri & Cie.,
Haselstrasse, CH-5401 Baden (CH)**

(72) Erfinder: **Kloss, Albert, Kornweg 5,
CH-5415 Nussbaumen (CH)**

(54) Wechselrichter für Anspeisung einer Asynchronmaschine.

(57) Bei einem Wechselrichter für Anspeisung einer Asynchronmaschine (5) mit eingeprägtem Strom und Phasenfolgelöschung besteht eine Drehstrombrücke aus gesteuerten
Hauptthyristoren (2) mit zugeordneten Kommutierungskondensatoren (3). In Serie mit den Hauptthyristoren (2) sind
gesteuerte Enkopplungsthyristoren (4) eingeschaltet, die
während der Sperrphase wirklich gesperrt bleiben, was bei
den bisher verwendeten Dioden nicht immer der Fall war.
Die erfindungsgemäße Lösung verhindert unerwünschte
Spannungsunsymmetrien an den Kommutierungskondensatoren (3) und somit auch Leistungsverminderungen in der
Asynchronmaschine (5).

Der erfindungsgemäße Wechselrichter ist insbesondere für Anspeisung von Antriebsmaschinen geeignet.

EP 0 065 038 A1

- 1 -

## Wechselrichter für Anspeisung einer Asynchronmaschine

Die Erfindung bezieht sich auf einen Wechselrichter für Anspeisung einer Asynchronmaschine mit eingeprägtem Strom und Phasenfolgelöschung, mit einer aus gesteuerten Hauptthyristoren gebildeten Drehstrombrücke mit zugeordneten Kommutierungskondensatoren und mit in Serie mit den Hauptthyristoren geschalteten Entkopplungsventilen.

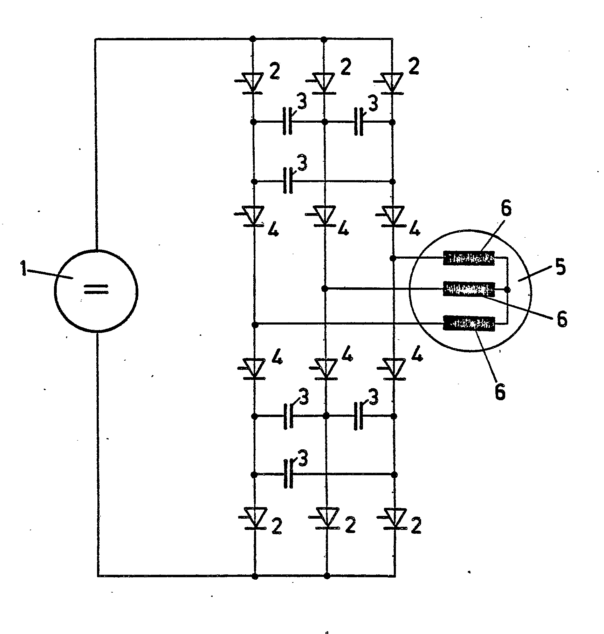

Zur Leistungssteuerung von Asynchronmaschinen mit Käfigläufer werden vorzugsweise Wechselrichter mit eingeprägtem Strom und Phasenfolgelöschung verwendet. Eine Ausführungsform dieser Art ist in "ETZ-A", Bd. 96 (1975), H. 11, S. 520 ff. beschrieben und in Fig. 2 dargestellt. Der Wechselrichter besteht aus sechs Hauptthyristoren in Brückenschaltung, aus sechs Dioden und aus sechs zugeordneten, in diesem Beispiel im Dreieck geschalteten Kommutierungskondensatoren. Als Gleichstromquelle dient vorwiegend ein gesteuerter Gleichrichter oder ein Gleichstromsteller. Der dreiphasige Wechselrichterausgang ist zu der Asynchronmaschine angeschlossen. Durch gezielte Zündung der Hauptthyristoren und nachfolgende Zusammenwirkung der Dioden mit dem Schwingkreis, der durch die Kommutierungskondensatoren und die Induktivitäten der Asynchronmaschine gebildet ist, wird der Asynchronmaschine ein Wechselstrom vorgegebener Frequenz und Phasenlage eingeprägt. Für die einwandfreie Wirkungsweise des
Wechselrichters ist es notwendig, dass die Dioden etwa
ein Drittel der Periode den Strom führen und etwa zwei
Drittel der Periode gesperrt bleiben. Dies für alle Betriebszustände des Wechselrichters zu erreichen, ist mit
einem erheblichen Aufwand für die theoretische Untersuchung und für die entsprechende Dimensionierung der
Bauelemente verbunden. Die Hauptthyristoren werden in
der Regel durch Frequenzthyristoren mit kurzer Freiwerdezeit und mit hoher Sperrspannung gebildet. Die Hauptaufgabe der richtigen Auslegung bei dieser bekannten Lösung
liegt in der Gewährleistung, dass die Dioden während der
Sperrphase wirklich gesperrt bleiben. Gelingt das nicht,
dann entstehen durch die unerwünschte Diodenstromführung
einerseits Spannungsunsymmetrien an den Kommutierungskondensatoren, andererseits Leistungsverminderungen in
der Asynchronmaschine, was selbstverständlich z.B. bei
Verwendung der Asynchronmaschine als Antriebsmaschine
unerwünscht ist.

Hier will die Erfindung Abhilfe schaffen. Die Erfindung,
wie sie in den Ansprüchen gekennzeichnet ist, löst die
Aufgabe, bei einem Wechselrichter der eingangs genannten
Art Spannungsunsymmetrien an den Kommutierungskondensatoren und die Leistungsverminderungen in der Asynchronmaschine zu verhindern.

Die durch die Erfindung erreichten Vorteile sind im
wesentlichen darin zu sehen, dass die gesteuerten Entkopplungsthyristoren die unerwünschte Stromführung verhindern und somit die vorausgesetzte Leistung der Asynchronmaschine sichern.

Im folgenden wird die Erfindung anhand von einem Beispiel näher erläutert.

Die Figur zeigt eine beispielsweise Ausführungsform des erfindungsgemässen Wechselrichters, wobei die Kommutierungskondensatoren im Dreieck angeschlossen sind.

Eine gesteuerte Gleichstromquelle 1 ist durch einen gesteuerten Gleichrichter gebildet. Sie ist an eine aus sechs Hauptthyristoren 2 gebildete Drehstrombrücke angeschlossen. Kommutierungskondensatoren 3 verbinden die Stromwege in jeder Hälfte der Drehstrombrücke in Dreieckschaltung. In Serie mit den gesteuerten Hauptthyristoren 2 sind gesteuerte Entkopplungsthyristoren 4 eingeschaltet. Die Mitte der Drehstrombrücke speist eine Asynchronmaschine 5 an, deren drei Induktivitäten 6 mit den Kommutierungskondensatoren 3 als Schwingkreise funktionieren. Der Gleichstrom aus der gesteuerten Gleichstromquelle 1 wird durch die Wirkung der Hauptthyristoren 2, der Kommutierungskondensatoren 3 und der Entkopplungsthyristoren 4 wechselrichtet und zu der Asynchronmaschine 5 zugeführt. Die Hauptthyristoren 2 werden entsprechend der geforderten Frequenz und Phasenlage des Stromes der Asynchronmaschine 5 gesteuert. Die Entkopplungsthyristoren 4 werden dann gezündet, wenn an ihnen zum erstenmal positive Spannung erscheint. Bei den Entkopplungsthyristoren 4 ist jedoch gesichert, dass sie im Gegensatz zu den bisher verwendeten, nicht gesteuerten Ventilen nach dem Stromleitzustand dauernd gesperrt bleiben, und zwar auch wenn an ihnen eine positive Spannung in der Sperrphase entsteht. Die richtige Wirkungsweise des Wechselrichters bleibt also bei allen Betriebszuständen erhalten.

Als Entkopplungsthyristoren 4 kann man Netzthyristoren einschalten, womit man eine wirtschaftliche Anordnung erreicht. Für den am meisten realisierten Fall, dass als Hauptthyristoren 2 Frequenzthyristoren verwendet werden, kann man als Entkopplungsthyristoren 4 ebenfalls Frequenzthyristoren verwenden, so dass alle Thyristoren derselben Art sind.

Es ist selbstverständlich, dass die dargestellte Schaltung nur eine beispielsweise Ausgestaltung zeigt. So kann z.B. an Stelle der Dreieckschaltung der Kommutierungskondensatoren 3 eine Sternschaltung Verwendung finden.

P a t e n t a n s p r ü c h e

1. Wechselrichter für Anspeisung einer Asynchronmaschine (5) mit eingeprägtem Strom und Phasenfolgelöschung, mit einer aus gesteuerten Hauptthyristoren (2) gebildeten Drehstrombrücke mit zugeordneten Kommutierungskondensatoren (3) und mit in Serie mit den Hauptthyristoren (2) geschalteten Entkopplungsventilen, dadurch gekennzeichnet, dass die Entkopplungsventile durch gesteuerte Entkopplungsthyristoren (4) gebildet sind.

2. Wechselrichter nach Anspruch 1, dadurch gekennzeichnet, dass die gesteuerten Entkopplungsthyristoren (4) durch Netzthyristoren gebildet sind.

3. Wechselrichter nach Anspruch 1, dadurch gekennzeichnet, dass die gesteuerten Entkopplungsthyristoren (4) durch Frequenzthyristoren gebildet sind.

0065038

Bezeichnungsliste
────────────────────

1   gesteuerte Gleichstromquelle

2   Hauptthyristoren

3   Kommutierungskondensatoren

4   Entkopplungsthyristoren

5   Asynchronmaschine

6   Induktivitäten der Asynchronmaschine

0065038

¹/₁

39/81 1/1

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | GB - A - 1 193 163 (INDUSTRIAL INSTRUMENTS LTD.) * Seite 1, Zeile 85 - Seite 2, Zeile 115 * | 1-3 |
| X | CH - A - 400 338 (LICENTIA) * Seite 1, Zeile 30 - Seite 3, Zeile 103 * | 1-3 |
| | FR - A - 1 401 611 (BROWN BOVERI) * Figur 4 * | 1 |

**KLASSIFIKATION DER ANMELDUNG (Int Cl³)**

H 02 M 7/515

**RECHERCHIERTE SACHGEBIETE (Int. Cl.³)**

H 02 M 7/515

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 18-01-1982 | BERTIN |

EPA form 1503.1 06.78